# EUROPÄISCHE PATENTSCHRIFT

(11) **EP 2 836 732 B1**
(45) Veröffentlichungstag und Bekanntmachung des Hinweises auf die Patenterteilung: **31.08.2016**
(21) Anmeldenummer: 13728100.2
(22) Anmeldetag: 11.04.2013
(51) Int. Cl.: F16C 35/063, F16C 13/00

(54) **VORRICHTUNG ZUR BANDFÜHRUNG IN EINEM HEISSEN MEDIUM**
DEVICE FOR GUIDING STRIP MATERIAL IN A HOT MEDIUM
DISPOSITIF DE GUIDAGE D'UN MATÉRIAU SOUS FORME DE BANDE DANS UN MILIEU A TEMPÉRATURE ÉLEVÉE

(30) Priorität: 12.04.2012 DE 102012103132
(43) Veröffentlichungstag der Anmeldung: 18.02.2015
(73) Patentinhaber: Cerobear GmbH, 52134 Herzogenrath (DE); ThyssenKrupp Steel Europe AG, 47166 Duisburg (DE)
(72) Erfinder: BLUMENAU, Marc, 58119 Hagen (DE); EISNER, Frank, 09127 Chemnitz (DE); GUSEK, Christopher, 58644 Iserlohn (DE); JINDRA, Fred, 57368 Lennestadt (DE); SCHÖNENBERG, Rudolf, Daphne, AL 36526 (US); WILLEKE, Bert-Reiner, 57368 Lennestadt (DE); DENNER, Tobias, 52134 Herzogenrath (DE); KLATT, Christian, 52070 Aachen (DE); WEMHÖNER, Jens, 52072 Aachen (DE)
(74) Vertreter: Naeven, Ralf
(86) Internationale Anmeldenummer: PCT/DE2013/100135
(87) Internationale Veröffentlichungsnummer: WO 2013/152764

(56) Entgegenhaltungen:
- WO-A1-92/11398
- DE-A1- 19 823 854

## Beschreibung

Die Erfindung betrifft eine Vorrichtung zur Bandführung in einem heißen Medium mit den Merkmalen des Oberbegriffs des Anspruchs 1.

Derartige Vorrichtungen werden zum Beispiel bei der kontinuierlichen Schmelztauchveredelung von Metallbändern eingesetzt. Bei dem heißen Medium handelt es sich in diesem Fall um ein Beschichtungsbad aus schmelzflüssigem Metall. Eine solche Vorrichtung kann aber auch zur Heißbehandlung eines Metallbandes mit Dampf oder Gas eingesetzt werden.

Bei der Schmelztauchveredelung wird das Metallband für mehrere Sekunden in das Beschichtungsbad eingetaucht, welches in der Regel eine Temperatur oberhalb von 400°C hat. So findet zum Beispiel eine Oberflächenveredelung von Stahlfeinblech mit einem Korrosionsschutzüberzug auf Zink-, Aluminium- oder Zink-Aluminium-Legierungsbasis eine breite industrielle Anwendung. Bei diesem Prozess wird das zu beschichtende Band über eine oder mehrere Umlenkrollen geführt, die an Tragarmen gelagert im Beschichtungsbad eingetaucht werden. Die Tragarme werden oberhalb des Beschichtungsbads an einer Trägereinrichtung, zum Beispiel einer Traverse, gehalten. Da Teile des Tragarms, die gesamte Umlenkrolle sowie die Umlenkrollen-Lagerung in den Tragarmen in das Beschichtungsbad eintauchen, sind diese Elemente hohen thermischen und mechanischen Belastungen sowie dem Materialangriff durch das aggressive Schmelzbad ausgesetzt. Den höchsten Verschleiß erfährt hierbei die Lagerung der Umlenkrolle an den Tragarmen.

Als Folge des Verschleißes können ein unruhiger Bandlauf und Markierungen auf der Bandoberfläche resultieren, welche die Oberflächenqualität des veredelten Metallbands wesentlich beeinträchtigen können. Im schlimmsten Fall kann auch ein Bruch im Bereich der Lagerung der Umlenkrolle auftreten, was nicht nur eine erhebliche Unterbrechung des laufenden Betriebes sondern auch eine Gefährdung des Bedienpersonals bedeutet. Um die Beeinträchtigung der erzeugten Oberflächenqualität oder ein Materialversagen zu vermeiden, wird bei auftretenden Anzeichen einer starken Verschleißerscheinung die Vorrichtung möglichst zeitnah ausgetauscht, was allerdings unweigerlich mit einem mehrstündigen Anlagenstillstand einhergeht. Ein Ersatz der Vorrichtung ist überdies kostenträchtig.

Aus der EP 1518003 B1 ist eine Vorrichtung zur Bandführung bekannt, bei der die Umlenkrolle mit Rollenzapfen in einem Gleitlager gelagert ist. Die Trägereinrichtung für die Tragarme besteht aus zwei räumlich voneinander getrennten Halteelementen, die jeweils einen Tragarm halten. Es ist offenbart, für das Gleitlager eine keramische Hülse mit Gleitflächen für den jeweiligen Rollenzapfen vorzusehen. Die Tragarme weisen jeweils eine verschleißfeste Anlaufplatte aus Keramik auf, gegen die der Rollenzapfen in axialer Richtung im Falle einer temperaturbedingten Längenausdehnung anlaufen kann. Es ist ein Spalt zwischen den Rollenzapfenenden und der jeweiligen Anlaufplatte vorgesehen, der eine thermisch bedingte Längenänderung der Umlenkrolle auffangen kann, ohne dass hierdurch die Tragarme senkrecht zu ihrer Längsausdehnung mechanisch belastet werden. Nachteilig ist jedoch, dass der Spalt eine unkontrollierte Bewegung der Umlenkrolle erlauben kann, solange die Rollenzapfen nicht an den Tragarmen anschlagen. Ist das Spiel zwischen den Rollenzapfen und dem Anschlag an den Tragarmen hingegen zu gering, kann es zu einer erheblichen mechanischen Belastung und zu einem Aufbiegen der Tragarme kommen. Diese Problematik ist im Stand der Technik nicht angesprochen.

Aus der WO 92/11398 A1 ist eine Vorrichtung zur Bandführung der eingangs genannten Art bekannt, die eine Lagerung eines der Tragarme mittels eines Loslagers vorsieht, welches dem damit gelagerten Tragarm an der Trägereinrichtung eine Bewegung parallel zur Längsrichtung der Umlenkrolle erlaubt. Damit kann die vorgenannte Problematik eines Aufbiegens der Tragarme vermieden werden. Allerdings besteht hier die Gefahr einer unkontrollierten Bewegung des am Loslager gelagerten Tragarms.

Aus der DE 196 08 670 A1 ist eine Lagerung für eine Umlenkrolle im Schmelzmetallbad offenbart, bei der an den Rollenzapfen jeweils Kugellager angeordnet sind, deren Schmiegung zwischen den Laufbahnen der Laufringe und den Kugeln stark reduziert ist. Die Lager sind deshalb vorwiegend zur Abstützung der Radialkräfte geeignet.

Zwischen den Rollenzapfen und an den Tragarmen vorgesehenen Anlaufplatten aus Hartmetall ist zur Aufnahme einer Längenausdehnung der Umlenkrolle ein Spiel vorgesehen. Im Zentrum jedes Rollenzapfens ist jeweils eine Keramikkugel angeordnet. Wegen des Spiels zwischen Rollenzapfen und Anlaufplatte ist die oben angesprochene Problematik einer in axialer Richtung möglicherweise instabilen Lagerung der Umlenkrolle oder einer hohen Belastung der Tragarme durch die sich ausdehnende Umlenkrolle hier ebenfalls gegeben.

Aus der EP 2159297 B1 ist eine weitere Vorrichtung zur Bandführung gemäß dem Oberbegriff des Anspruchs 1 bekannt. Die Trägereinrichtung für die Tragarme besteht auch hier aus zwei räumlich voneinander getrennten und an der Badbegrenzung fixierten Halteelementen. Die Lagerung der Umlenkrolle im Bereich der Rollenzapfen erfolgt mittels eines Wälzlagers, welches vollständig keramisch ausgebildet sein kann. Die mit einem Schutzüberzug versehenen Rollenzapfen können in axialer Richtung in den Wälzlagern gleiten. Am Tragarm ist eine Anlaufplatte vorgesehen, die zur Lagerung in axialer Richtung dient. Zwischen der Anlaufplatte und dem Ende des Rollenzapfens ist wie im zuvor dargestellten Stand der Technik ein Spiel vorgesehen, welches eine temperaturbedingte Längenänderung der Umlenkrolle aufnehmen kann.

Aus der WO 2006/002822 A1 ist eine Vorrichtung zur Bandführung bekannt, bei der die Umlenkrolle auf einer an den Tragarmen drehfest fixierten Welle gelagert ist. Diese Lagerung ist gegenüber dem Schmelzbad gekapselt, wobei Spalte im Bereich sich gegeneinander bewegender Teile mittels elektrischer Induktion gegen einen Schmelzeneintritt abgedichtet werden. Die Tragarme sind oberhalb des Schmelzbades an einer Traverse mit einer Verstellmöglichkeit entlang der Traverse fixiert.

Es ist nun Aufgabe der Erfindung, eine Vorrichtung der eingangs genannten Art zur Verfügung zu stellen, die es zum einen erlaubt, eine Längenänderung der Umlenkrolle aufzufangen und zum anderen eine unkontrollierte Bewegung des Systems zu vermeiden.

Diese Aufgabe wird durch die kennzeichnenden Merkmale des Anspruchs 1 gelöst. Vorteilhafte Ausgestaltungen sind durch die Unteransprüche gegeben.

Demnach wird vorgeschlagen, ein parallel zur Längsrichtung der Umlenkrolle wirkendes elastisches Gegenelement vorzusehen, welches auf den am Loslager gelagerten Tragarm wirkt und einem zunehmenden Abstand zwischen den Tragarmen entgegenwirkt. Das Gegenlager kann dabei mittelbar oder unmittelbar auf den Tragarm wirken.

Das Loslager ermöglicht in einer Richtung parallel zur Längsachse der Umlenkrolle eine Abstandsänderung zwischen den Tragarmen. Temperaturbedingte Längenänderungen der Umlenkrolle führen mit dieser Lösung nicht zu einem Aufbiegen der Tragarme sondern werden durch eine Abstandsänderung der Tragarme zueinander aufgefangen.

Das elastische Gegenelement vermeidet eine unkontrollierte Bewegung des am Loslager gelagerten Tragarms. Dies ist besonders vorteilhaft bei Einsatz einer Umlenkrolle, die über Rollenzapfen an den Tragarmen gelagert ist. Das im Stand der Technik zum Auffangen einer thermischen Ausdehnung der Umlenkrolle bekannte Spiel in axialer Richtung zwischen Rollenzapfen und Tragarmen kann gering gehalten oder auch vollständig vermieden werden. Insbesondere kann vorgesehen werden, die Rollenzapfen zumindest während der Aufwärmphase und des Einsatzes in der Schmelze dauerhaft an Anschlagsplatten, die an den zugehörigen Tragarmen angeordneten sind, anliegen zu lassen. Bei Temperaturerhöhung wird die Wärmeausdehnung der Umlenkrolle durch das Loslager der Tragarme an der Trägereinrichtung aufgefangen. Der auf das Loslager wirkende elastische Gegenkörper sorgt dafür, dass der entsprechende Tragarm dauerhaft mittelbar oder unmittelbar auch axial am Rollenzapfen der Umlenkrolle anliegen kann und die Umlenkrolle axial stützt, wodurch eine unkontrollierte axiale Bewegung der Umlenkrolle zwischen den Tragarmen verhindert wird.

Dies wirkt sich insbesondere vorteilhaft für den Übergang der Vorrichtung von der Lagerung bei Raumtemperatur zu einem Vorwärmofen aus, der die Vorrichtung bis zu einer Temperatur nahe der des heißen Mediums, z.B. des Schmelzbades, aufheizt. Das Loslager ermöglicht ein Mitwachsen des Abstandes der Tragarme zueinander entsprechend der Längenänderung der Umlenkrolle. Der elastische Gegenkörper drückt die Tragarme wiederum gegen die Umlenkrolle und hält somit die gesamte Vorrichtung zumindest für den Transport der Vorrichtung und das Eintauchen in das heiße Medium hinreichend stabil. Somit kann trotz der starken Temperaturerhöhung die Umlenkrolle in axialer Richtung zwischen den Tragarmen ohne Spiel gehalten werden.

Es kann eine Möglichkeit vorgesehen sein, das elastische Gegenelement in seiner Position am Tragarm in Richtung seiner Längserstreckung zu verstellen. Somit kann die auf den Tragarm wirkende elastische Kraft des Gegenelements variiert werden. Zu Montagezwecken kann bei entsprechender Verstellbarkeit das elastische Element vom Tragarm entfernt werden.

Die erfindungsgemäße Vorrichtung zur Bandführung kann auch mehr als eine Umlenkrolle an denselben oder an gesonderten Tragarmen aufweisen, wobei die erfindungsgemäßen Merkmale auch für die weiteren Umlenkrollen vorgesehen werden können. Die weiteren Umlenkrollen können z.B. als Führungsrollen für das zu behandelnde Band dienen. Die weiteren Umlenkrollen können ebenfalls - soweit vorhanden - in das heiße Medium, z.B. in das Beschichtungsbad, eintauchen oder im Einsatz auch ohne Kontakt hierzu bleiben.

Die Trägereinrichtung kann eine Traverse sein. Die Erfindung kann aber auch zwei räumlich voneinander getrennte Halteelemente, die jeweils einen der Tragarme halten, umfassen.

Weiterhin kann es vorteilhaft sein, Fixierungsmittel zur Fixierung des über das Loslager gelagerten Tragarms an der Trägereinrichtung vorzusehen. Eine Fixierung des Tragarms könnte insbesondere sinnvoll sein, nachdem die Vorrichtung den Vorwärmofen verlassen hat, d. h. unmittelbar vor dem Eintauchen in das heiße Medium. Da die Vorrichtung bei Verlassen des Vorwärmofens bereits bis nahe an die Temperatur des heißen Mediums aufgeheizt wurde, tritt hiernach eine signifikante Längenausdehnung nicht mehr auf. Die Fixierung des Tragarms erlaubt der Umlenkrolle beim Eintauchen und während des Beschichtungsvorganges keine wesentliche Axialbewegung mehr, wodurch den während des Tauchbades aufgrund der Bewegung des Metallbandes gegebenen besonderen mechanischen Belastungen begegnet und ein ruhiger Lauf des zu behandelnden Metallbandes gesichert werden kann. Während der Tragarm an der Trägereinrichtung fixiert ist, sind das zugehörige Loslager und der elastische Gegenkörper funktionslos. Die Fixierung des Tragarmes kann auch unmittelbar im Bereich des Loslagers erfolgen, das dadurch zu einem Festlager wird.

Es kann vorteilhaft sein, die erfindungsgemäße Vorrichtung so auszubilden, dass ein in seiner Position einstellbares Tragarm-Anschlagselement zur Begrenzung der Loslagerbewegung vorhanden ist. Hierdurch ist keine vollständige Fixierung des Loslagers gegeben sondern lediglich eine Begrenzung für eine den Abstand zwischen den Tragarmen vergrößernde Bewegung. Da die Temperatur des heißen Mediums in der Regel von vornherein bekannt ist, kann die Position des Tragarm-Anschlagselements bereits vor dem Aufwärmvorgang in geeigneter Weise so eingestellt werden, dass bei Erreichen der Maximaltemperatur der am Loslager gelagerte Tragarm mittelbar oder unmittelbar am Tragarm-Anschlagselement anschlägt, so dass sich der Abstand zwischen den Tragarmen nicht weiter vergrößern kann. Eine Verkleinerung des Abstandes verhindert die Umlenkrolle, die ihrerseits an den Tragarmen anliegt. Somit ist das Gesamtsystem auch nach Eintauchen in das heiße Medium stabil.

Das Tragarm-Anschlagselement kann in seiner Position auch nach Abschluss des Aufwärmvorgangs und vor Eintauchen in das heiße Medium positioniert werden.

Die erfindungsgemäße Vorrichtung kann auch so ausgebildet sein, dass die Lagerung der Umlenkrolle an den Tragarmen ungekapselt ist. Hierdurch werden der höhere Aufwand im Zusammenhang mit einem das Zapfenlager vom heißen Medium abkapselnden Schutz sowie der höhere Raumbedarf vermieden. Zudem ist eine Kapselung kostenträchtig und gegebenenfalls auch eine Quelle weiterer Reparaturanfälligkeit.

Die erfindungsgemäße Vorrichtung kann weiterhin auch so ausgebildet sein, dass zur Lagerung der Umlenkrolle an den Tragarmen ein keramisches Zapfenlager vorgesehen ist. Der Rollenzapfen besteht in der Regel wie die Umlenkrolle selbst aus Metall. Bei Verwendung eines keramischen Zapfenlagers ist wegen der unterschiedlichen Wärmeausdehnung der beteiligten Materialien in radialer Richtung ein Lagerspalt zwischen dem Zapfenlager und dem Rollenzapfen vorzusehen. Dabei besteht die Gefahr, dass sich in dem Lagerspalt das heiße Medium, z.B. Schmelze, festsetzt, beim Herausziehen der Vorrichtung aus dem heißen Medium erkaltet, erstarrt und auf diese Weise den Außendurchmesser des Rollenzapfens im Bereich des Zapfenlagers erhöht. Auf diese Weise kann das Spiel zwischen Zapfenlager und Rollenzapfen in radialer Richtung ständig verringert werden, bis das Spiel für die unterschiedlichen Wärmeausdehnungskoeffizienten nicht mehr ausreicht. Es kann zu einer Zerstörung des Lagers kommen. Um dieser Gefahr eines ungekapselten Lagers zu begegnen, kann es vorteilhaft sein, den Lagerspalt gegen das Eindringen des heißen Mediums abzudichten. Hierzu kann es vorteilhaft sein, das Zapfenlager am Rollenzapfen in einer Nut zu führen und den in axialer Richtung zwischen den seitlichen Nutwänden und dem Zapfenlager gegebenen Spalt gegen das Eindringen der Schmelze abzudichten.

Diese Abdichtung kann z. B. mittels einer elastischen Dichtscheibe erfolgen, die z. B. aus Graphit besteht oder Graphit enthält.

Das Zapfenlager kann ein Wälzlager oder auch ein Gleitlager sein.

Die erfindungsgemäße Vorrichtung kann auch so ausgebildet sein, dass an den Rollenzapfen für ein axial gerichtetes Anstoßen gegen die Tragarme Stoßkörper, z. B. aus Keramik, lösbar fixiert sind. Der Kontakt zwischen Stoßkörper und zugehörigem Tragarm ist während des Betriebs der erfindungsgemäßen Vorrichtung bevorzugt dauerhaft, so dass die Umlenkrolle in axialer Richtung stabil zwischen den Tragarmen gelagert ist. Dabei kann die lösbare Fixierung der Stoßkörper mittels einer oder mehrerer Schraubenverbindungen realisiert sein.

Das eine Rotation der Umlenkrolle relativ zu den Tragarmen ermöglichende Zapfenlager ist in den Tragarmen gegen Verkippen, Verdrehen oder Lösen aus einer Lageraufnahme des Tragarms zu sichern. Da das Zapfenlager bevorzugt aus Keramik besteht, die Tragarme hingegen in der Regel aus einem anderen Material, zum Beispiel Metall, kann die Erwärmung der erfindungsgemäßen Vorrichtung zu unterschiedlichen thermischen Ausdehnungen der Lageraufnahme im Tragarm zum einen und der Zapfenlager zum anderen führen, so dass das Zapfenlager möglicherweise zu locker in der Lageraufnahme sitzt. Deshalb kann es vorteilhaft sein, die Zapfenlager jeweils im zugehörigen Tragarm mittels am äußeren Rand des Zapfenlagers angreifenden Kraft- oder Formschlusses zu sichern.

Die erfindungsgemäße Vorrichtung kann so ausgebildet sein, dass die Sicherung des Zapfenlagers mittels eines am Zapfenlager und am Tragarm angreifenden Klemmkörpers erfolgt. Ein solcher Klemmkörper kann im Vergleich zum Material des Tragarms einen höheren thermischen Ausdehnungskoeffizienten aufweisen, so dass die Klemmwirkung auch bei thermischer Ausdehnung des Tragarms erhalten bleibt. Zum Beispiel kann ein Klemmkörper aus austenitischem Stahl oder Edelstahl. Die Variante des Klemmkörpers aus austenitischem Stahl kann z.B. für einen Tragarm aus ferritischem Stahl oder Edelstahl eingesetzt werden, ist aber nicht darauf beschränkt.

Der Klemmkörper kann zum Beispiel stabförmig oder ringförmig sein.

Es können auch mehrere gemeinsam wirkende Klemmkörper vorgesehen werden, die sämtlich höhere thermische Ausdehnungskoeffizienten im Vergleich zum Material des Tragarms aufweisen. Es können aber auch ein oder mehrere Klemmkörper vorgesehen werden, deren thermischer Ausdehnungskoeffizient gleich oder niedriger als der des Materials des Tragarms ist, sofern einer der Klemmkörper dieses wieder ausgleicht.

Ein Klemmkörper, alleine oder zusammen mit einem oder mehreren anderen Klemmkörpern wirkend, kann anstelle eines höheren thermischen Ausdehnungskoeffizienten oder zusätzlich dazu ein alternatives Merkmal oder mehrere alternative Merkmale zur Überbrückung der unterschiedlichen Ausdehnungskoeffizienten zwischen Tragarm und Zapfenlager aufweisen. Ein solches Merkmal kann zum Beispiel eine Keilform des Klemmkörpers oder eines Teils hiervon sein. Bei sich aufweitender Lageraufnahme kann die Klemmwirkung eines entsprechenden Keilelements dadurch erhalten werden, dass das Keilelement weiter in die Lageraufnahme hineingedrückt wird. Die für die Verschiebung des Keilelements notwendige Kraft kann zum Beispiel von einem federelastischen Element zur Verfügung gestellt werden. Die Federkraft ist dabei so zu bemessen, dass beim Abkühlprozess das Keilelement in eine der Federkraft des elastischen Federelements entgegengesetzte Richtung gleiten kann, um ein Zerdrücken des Zapfenlagers zu vermeiden.

So kann im Falle eines ringförmigen Klemmkörpers dieser ein ringförmiges und im Querschnitt keilförmiges Keilstück mit in axialer Richtung abnehmender Dicke umfassen. Dieses Keilstück kann mittelbar oder unmittelbar am Tragarm und am Zapfenlager angreifen, um letzteres durch Klemmung in der Lageraufnahme zu fixieren.

Alternativ oder zusätzlich zu einem oder mehreren Klemmkörpern kann für die Sicherung gegen Rotation mindestens ein Zuganker vorgesehen werden. Dabei kann der mindestens eine Zuganker zwischen zwei eine Zapfenlageraufnahme bildenden getrennten Tragarm-Teilen wirken und einen gegenüber dem Material des Tragarms geringeren thermischen Ausdehnungskoeffizienten aufweisen.

Weiterhin kann alternativ oder zusätzlich zu einem oder mehreren Klemmkörpern und/oder zu mindestens einem Zuganker die Sicherung des Zapfenlagers durch einen formschlüssig auf das Zapfenlager wirkenden Anschnitt der Zapfenlageraufnahme des Tragarms erreicht werden.

Ein Formschluss kann als alternative oder zusätzliche Maßnahme auch durch in Nuten des Tragarms eingreifende Ausläufer des Lageraußenrings vorgesehen werden.

Im Folgenden werden beispielhafte Ausführungsformen der Erfindung anhand von Figuren dargestellt.

Es zeigt schematisch:
- Fig. 1:: eine über Tragarme an einer Traverse gehaltene Umlenkrolle,
- Fig. 2:: einen Abschnitt einer Traverse mit Loslager und einer Gegenkörpereinheit,
- Fig. 3:: die Gegenkörpereinheit nach Fig. 2 in perspektivischer Ansicht,
- Fig. 4:: eine zum Loslager gehörende Verschiebeeinheit,
- Fig. 5:: einen Rollenzapfen an einer Umlenkrolle mit Wälzlager,
- Fig. 6:: einen Rollenzapfen an einer Umlenkrolle mit Gleitlager,
- Fig. 7:: Teil eines Tragarms mit Stabelement zur Wälzlager-Klemmung,
- Fig. 8:: im Querschnitt Teil eines Tragarms mit Keilring zur Wälzlager-Klemmung,
- Fig. 9:: Wälzlager-Klemmung gemäß Fig. 8 in Aufsicht,
- Fig. 10:: Teil eines Tragarms mit Anschnitt in einer Lageraufnahme,
- Fig. 11:: Teil eines Tragarms mit Zugankern zur Wälzlager-Klemmung und
- Fig. 12:: Aufbau zur Montage eines Stoßkörpers.

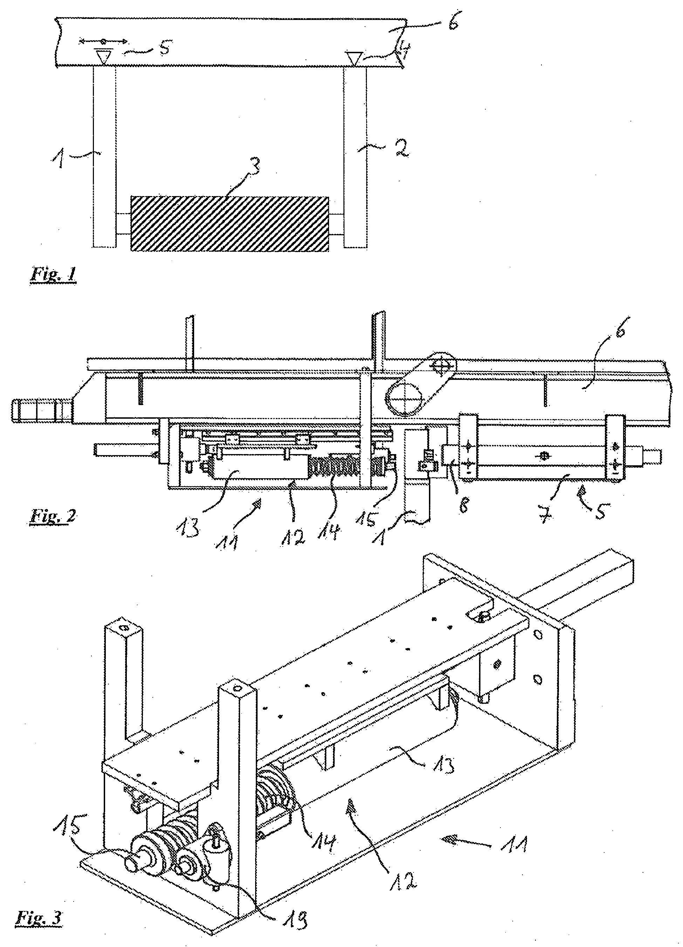

Figur 1 zeigt schematisch eine an zwei Tragarmen 1 und 2 drehbar gelagerte Umlenkrolle 3. Der rechte Tragarm 2 ist über ein Festlager 4 und der linke Tragarm 1 über ein Loslager 5 an einer Traverse 6 gelagert.

In Figur 2 ist die Traverse 6 in einer beispielhaften Ausführungsform im Bereich des Loslagers 5 abschnittsweise dargestellt. Das Loslager 5 umfasst ein Loslager-Gehäuse 7, in dem eine Verschiebeeinheit 8 parallel zur Traverse 6 verschiebbar angeordnet ist.

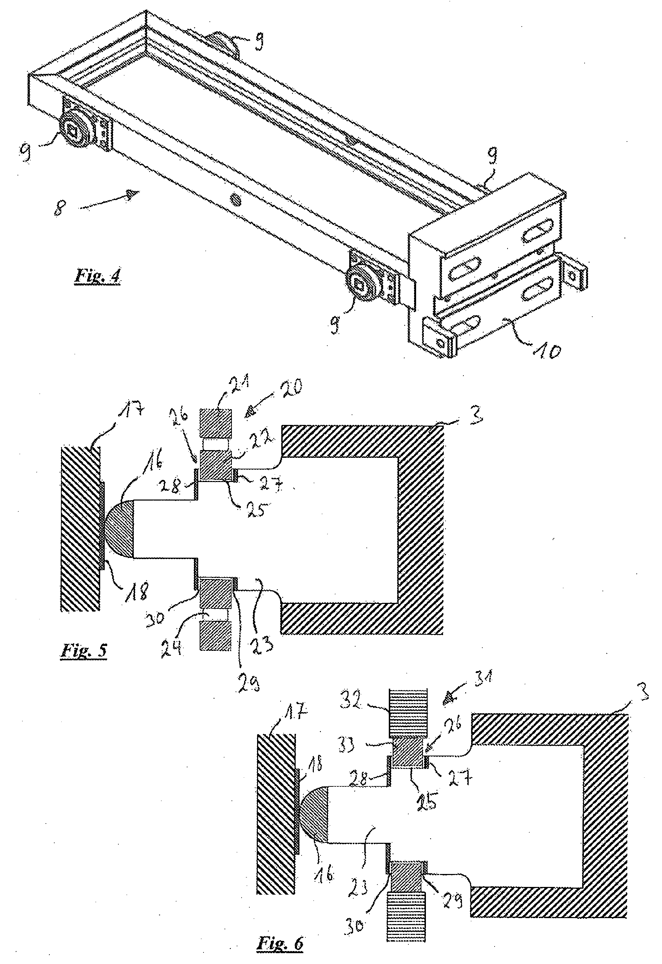

Figur 4 zeigt in perspektivischer Ansicht die Verschiebeeinheit 8, die auf Rollen 9 im Loslagergehäuse 7 abgestützt ist. An einer Armhalterung 10 ist der in Figur 1 linke Tragarm 1 fixiert.

An der Traverse 6 ist außerdem eine Stabilisierungseinheit 11 vorgesehen, welche über den Tragarm 1 mit dem Loslager 5 zusammenwirkt. Die Stabilisierungseinheit 11 ist vergrößert in perspektivischer Ansicht in Figur 3 dargestellt. Die Stabilisierungseinheit 11 umfasst zum einen ein elastisches Gegenelement 12, welches eine Grundeinheit 13, eine Federeinheit 14 sowie ein Tragarm-Anschlagselement 15 aufweist. Das elastische Gegenelement 13 ist in Richtung seiner Längserstreckung verstellbar innerhalb der Stabilisierungseinheit 11 angeordnet. Die Verstellbarkeit kann zum Beispiel über einen hier nicht dargestellten Spindeltrieb erfolgen. In fertig montiertem Zustand liegt das Tragarm-Anschlagselement 15 - anders als in Figur 2 gezeigt - am Tragarm 1 an. Das Tragarm-Anschlagselement 15 lässt sich gegen die Kraft der Federeinheit 14 in Richtung auf die Grundeinheit 13 des elastischen Gegenelements 12 in Längsrichtung verschieben. Somit wirkt das elastische Gegenelement 12 mit der Federkraft seiner Federeinheit 14 einer den Abstand zwischen den Tragarmen 1 und 2 erhöhenden Bewegung des Tragarms 1 entgegen, erlaubt aber gleichzeitig eine Erhöhung dieses Abstandes zwischen den Tragarmen 1 und 2 auf Grund einer Längenausdehnung der Umlenkrolle 3.

Das elastische Gegenelement 12 stabilisiert somit den Tragarm 1 in seiner Position insbesondere während der Aufwärmphase, in der die gesamte Vorrichtung auf Temperaturen nahe der zu erwartenden Badtemperatur gebracht wird. Die Umlenkrolle 3, die über einen Stoßkörper 16 (siehe Figur 5) lediglich an einer Anschlagsplatte 18, die an einem Sicherungsbügel 17 des Tragarms 3 angeordnet ist, anstößt, wird durch die Wirkung des elastischen Gegenelements 12 in axialer Richtung gesichert.

Ist der Aufwärmprozess der Gesamtvorrichtung abgeschlossen, ist auch durch das Eintauchen in das Schmelzbad keine nennenswerte zusätzliche Längenausdehnung der Umlenkrolle 3 zu erwarten. Hierzu ist an der Stabilisierungseinheit 11 ein Begrenzungsanschlagselement 19 vorgesehen, das zum Beispiel über ein weiteres Spindeltriebelement (hier nicht dargestellt) nach vollzogener Erwärmung gegen den Tragarm 1 angestellt oder bereits zuvor in eine geeignete Position gebracht wird, so dass eine weitere Vergrößerung des Abstandes zwischen den Tragarmen 1 und 2 verhindert wird.

Figur 5 zeigt eine beispielhafte Lagerung der Umlenkrolle 3 mit einem Wälzlager 20, dessen Außenring 21 am zugehörigen Tragarm 1, von dem in Fig. 5 lediglich der Sicherungsbügel 17 sichtbar ist, fixiert ist. In entsprechender Weise sieht die Lagerung am weiteren Tragarm 2 (siehe Fig. 1) aus. Ein Innenring 22 des Wälzlagers 20 umschließt einen metallischen Rollenzapfen 23 der Umlenkrolle 3. Außenring 21, Innenring und Wälzkörper 24 des Wälzlagers 20 sind keramisch. Auf Grund des im Vergleich zum Metall des Rollenzapfens 23 deutlich geringeren Ausdehnungskoeffizienten der Keramik wird zwischen dem Rollenzapfen 23 und dem Innenring des Wälzlagers 22 in radialer Richtung ein Lagerspalt 25 vorgesehen. Rollenzapfen 23 und Wälzlager 20 sind bei eingetauchter Umlenkrolle 3 von heißer Metallschmelze umgeben. Der Innenring 22 des Wälzlagers 20 ist in einer umlaufenden Nut 26 angeordnet, die durch Begrenzungsscheiben 27 und 28 gebildet ist. Die Begrenzungsscheiben 27 und 28 können metallisch oder keramisch sein. Zwischen den Begrenzungsscheiben 27 und 28 und dem Innenring 22 verbleibt jeweils ein Spalt, der mit einer elastischen Dichtscheibe 29 und 30 gefüllt ist, um den Zutritt der Metallschmelze zum Lagerspalt 25 zu verhindern und diesen damit abzudichten.

Am vorderen Ende des Rollenzapfens 23 ist der zum Beispiel keramische Stoßkörper 16 vorgesehen, der im vorliegenden Beispiel halbkugelförmig ist. Der Stoßkörper 16 steht in Kontakt mit der Anschlagsplatte 18 aus einem besonders verschleißfesten metallischen oder keramischen Werkstoff, die am Sicherungsbügel 17 des Tragarms 1 (siehe Fig. 1) fixiert ist.

Das Loslager 5 sorgt zusammen mit dem elastischen Gegenelement 12 (siehe Figur 1) dafür, dass der Tragarm 1 mit seiner Anschlagsplatte 18 am Stoßkörper 16 anliegt. Kommt es nun zu einer temperaturbedingten Ausdehnung der Umlenkrolle 3, drückt der Stoßkörper 16 über die Anschlagsplatte 18 auf den Tragarm 1, der dadurch in Figur 1 nach links verschoben wird. Das Loslager 5 erlaubt gegen den Widerstand des elastischen Gegenelements 12 diese Bewegung. Bei einer Abkühlung sorgt das elastische Gegenelement 12 dafür, dass der Tragarm 1 einer Kontraktion der Umlenkrolle 3 folgt. Somit ist die Umlenkrolle 3 in axialer Richtung hinreichend zwischen den Tragarmen 1 und 2 fixiert, um unerwünschte axiale Bewegungen der Umlenkrolle 3 zwischen den Tragarmen 1 und 2, zum Beispiel während eines Transports der Gesamtvorrichtung, zu verhindern.

Figur 6 zeigt eine Anordnung wie in Figur 5, wobei allerdings das Wälzlager 20 durch ein Gleitlager 31 ersetzt ist. Das Gleitlager 31 besteht aus einer Gleitlagerschale 32 und einem Gleitlagerinnenring 33, wobei zumindest der Gleitlagerinnenring 33 aus einer Keramik besteht.

Im Übrigen stimmen die Figuren 6 und 5 überein, weshalb wegen der weiteren Bezugszeichen auf die Beschreibung zu Figur 5 verwiesen wird.

In Figur 5 ist nicht dargestellt, wie das Wälzlager 20 im Tragarm 1 (siehe Figur 1) gehalten ist. Der Tragarm 1 besteht in der Regel aus Metall, während das Wälzlager 20 bevorzugt komplett aus Keramik gefertigt ist. Da auf Grund dessen erhebliche Unterschiede in den Ausdehnungskoeffizienten von Wälzlager 20 und Tragarm 1 gegeben sind, sind besondere Vorkehrungen zu treffen, das Wälzlager 20 im Tragarm 1 zu fixieren.

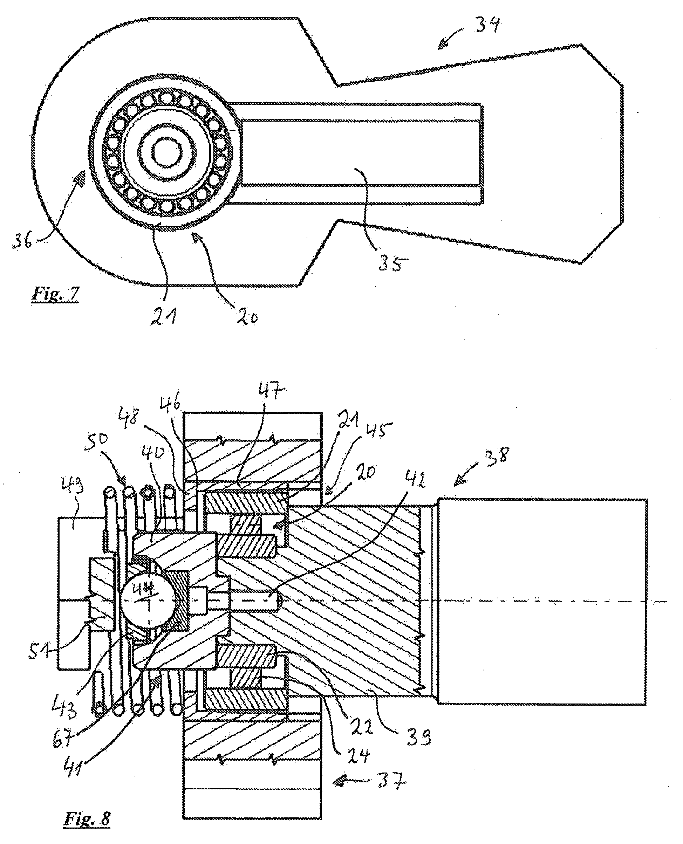

In den Figuren 7 bis 11 sind nun unterschiedliche Varianten der Wälzlagerfixierung schematisch vorgestellt, bei denen das Wälzlager 3 entweder durch Kraftschluss oder Formschluss fixiert wird.

Figur 7 zeigt schematisch eine erste Tragarmvariante 34, bei der das Wälzlager 20 mittels eines stabförmigen Klemmelements 35 fixiert wird. Das Klemmelement 35 weist einen höheren thermischen Ausdehnungskoeffizienten als das umgebende Tragarmmaterial auf. Das Material des Klemmelements 35 ist dann so zu wählen, dass das Klemmelement 35 den Wälzlageraußenring 21 gegen den dem Klemmelement 35 gegenüberliegenden Wandbereich 36 der das Wälzlager 20 aufnehmenden Lageraufnahme des Tragarms 34 drückt, ohne den Wälzlageraußenring 21 zu zerquetschen.

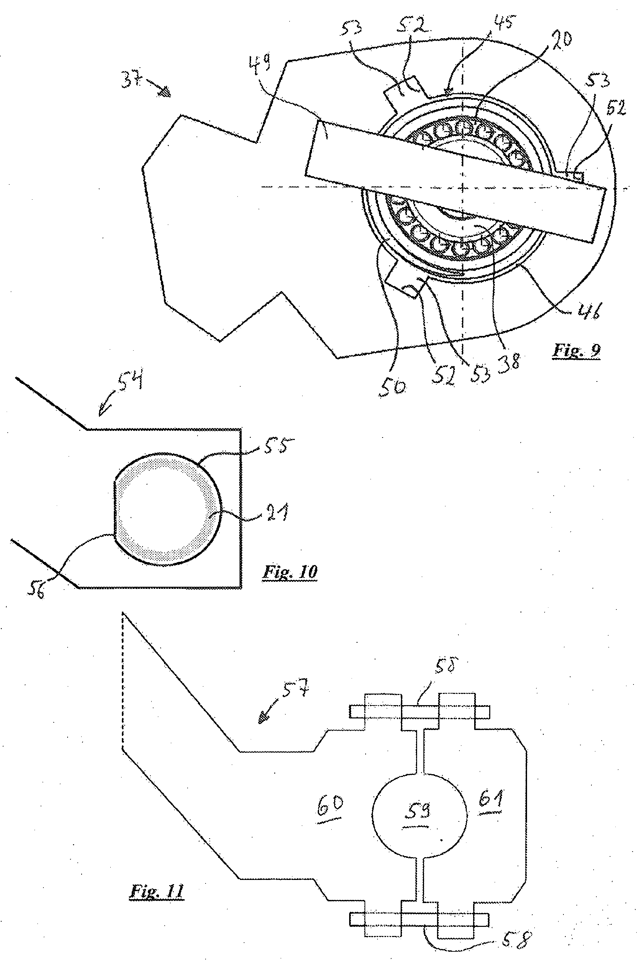

Die Figuren 8 und 9 zeigen schematisch eine zweite Tragarmvariante 37, in der eine Umlenkrollenvariante 38 über das Wälzlager 20 gelagert ist. Auf einem Rollenzapfen 39 der Umlenkrollenvariante 38 ist der Unterblock 40 einer Stoßkörperhalterung 41 mittels einer Schraube 42 befestigt. Dabei dient der Unterblock 40 gleichzeitig als seitliche Begrenzung für die den Innenring 22 des Wälzlagers 20 aufnehmende Nut. In Figur 8 nicht eingezeichnet sind die in den Figuren 5 und 6 dargestellten Spalte (radialer Lagerspalt 25 und mit elastischen Dichtscheiben 29 und 30 gefüllte axiale Spalte), die jedoch auch für das Ausführungsbeispiel gemäß Figur 8 tatsächlich vorgesehen sind.

Die Stoßkörperhalterung 41 umfasst des Weiteren eine im Unterblock 40 angeordnete Stoßkörperaufnahme 67 und ein Fixierelement 43, das mit einem Außengewinde in ein Innengewinde des Unterblocks 40 eingeschraubt werden kann, um einen kugelförmigen Stoßkörper 44 gegen die Stoßkörperaufnahme 67 einzuklemmen. Der Rollenzapfen 39 und das Wälzlager 20 sind in einer Lageraufnahme 45 der zweiten Tragarmvariante 37 aufgenommen. Zwischen dem Lageraußenring 21 und der Wandung der Lageraufnahme 45 ist ein ringförmiges Keilelement 46 angeordnet, welches einen konstanten Außenradius aufweist. Das Keilelement 46 umfasst ein axial verlaufendes Keilstück 47 und ein radial ausgerichtetes Endstück 48. Bei konstantem Außendurchmesser nimmt der Innendurchmesser des Keilstücks 47 vom Endstück 48 hin zum anderen, gegenüberliegenden Ende leicht zu. Mit dem Keilstück 47 wird der Abstand zwischen dem Lageraußenring 21 und der inneren Wand der Lageraufnahme 45 der zweiten Tragarmvariante 37 überbrückt. Wächst auf Grund der größeren thermischen Längenausdehnung der zweiten Tragarmvariante 37 der Abstand der Wandung der Lageraufnahme 45 zum Lageraußenring 21, kann das Keilelement 46 in axialer Richtung nachrutschen, um die Klemmung des Lageraußenrings 21 in der Lageraufnahme 45 aufrechtzuerhalten.

Ein Sicherungsbügel 49 der zweiten Tragarmvariante 37 überspannt eine Feder 50, die zwischen Sicherungsbügel 49 und dem Endstück 48 des Keilelements 46 eingespannt ist, so dass die Feder 50 ein Nachrücken des Keilelements 46 bewirkt, sobald sich der Abstand zwischen Lageraußenring 21 und Innenwand der Lageraufnahme 45 vergrößert. Die von der Feder 50 auf das Keilelement 46 wirkende Kraft muss so bemessen sein, dass das oben beschriebene Nachrücken gewährleistet ist, zum anderen aber ein Zurückgleiten des Keilelements 46 bei Erkaltung der zweiten Tragarmvariante ermöglicht wird, um ein Zerdrücken des Wälzlagers 20 beim Erkalten der Gesamtvorrichtung zu verhindern. Das Zurückgleiten kann durch eine geeignete Form des Keilelements 46 ermöglicht werden, z.B. mit einem Keilwinkel, der größer ist als der Selbsthemmungswinkel bei den gegebenen Randbedingungen.

Ist die zweite Tragarmvariante 37 in die Gesamtvorrichtung eingebaut, wird ein elastisches Gegenelement (zum Beispiel Gegenelement 12 gemäß Figur 2) auf die zweite Tragarmvariante 37 wirken, so dass bei fertig montierter Vorrichtung der Stoßkörper 44 an einer Anschlagplatte 51 des Sicherungsbügels 49 anliegt. Auf diese Weise ist die Umlenkrollenvariante 38 hinreichend zwischen den Tragarmen fixiert. Fig. 8 zeigt demgegenüber einen Vormontage-Zustand, bei dem der Stoßkörper 44 einen Abstand zur Anschlagsplatte 51 aufweist.

Figur 9 zeigt eine seitliche Aufsicht auf die zweite Tragarmvariante 37. Unter dem Sicherungsbügel 49 ist die Feder 50 zu erkennen. Die Lageraufnahme 45 der zweiten Tragarmvariante 37 weist drei Nuten 52 auf, die jeweils entsprechend geformte Ausläufer 53 des Keilelements 46 aufnehmen. Hierdurch wird ein Verdrehen des Keilelements in der Lageraufnahme 45 verhindert.

Figur 10 zeigt eine dritte Tragarmvariante 54, die eine Lageraufnahme 55 mit Anschnitt 56 aufweist. Der Außenring des hier nur schematisch dargestellten Wälzlagers 20 weist einen entsprechenden Anschnitt auf, so dass bei höheren Temperaturen auf Grund der Aufweitung der Lageraufnahme 55 der Wälzlageraußenring 21 zwar nicht mehr rundherum geklemmt ist, der Anschnitt 56 jedoch ein Durchdrehen des Wälzlagers in der dritten Tragarmvariante 54 verhindert. In Figur 10 ist diese Variante nur grob prinzipiell dargestellt.

Figur 11 zeigt eine vierte Tragarmvariante 57, die eine Klemmung des hier nicht dargestellten Wälzlagers mittels zweier Zugankerstäbe 58 vorsieht. Die Zugankerstäbe 58 sollen einen thermischen Ausdehnungskoeffizienten aufweisen, der möglichst weitgehend mit dem des hier nicht dargestellten Wälzlagers übereinstimmt, im Idealfall identisch ist. Somit könnten die Zugankerstäbe 58 zum Beispiel aus demselben Material, zum Beispiel aus Keramik, wie das Wälzlager bestehen. Somit entspricht die thermisch bedingte Aufweitung einer Wälzlageraufnahme 59, die durch zwei voneinander getrennte Teilstücke 60 und 61 der vierten Tragarmvariante 57 gebildet ist, jedenfalls in Längsrichtung der Zugankerstäbe 58 im Wesentlichen der thermischen Längenausdehnung des Wälzlagers selbst.

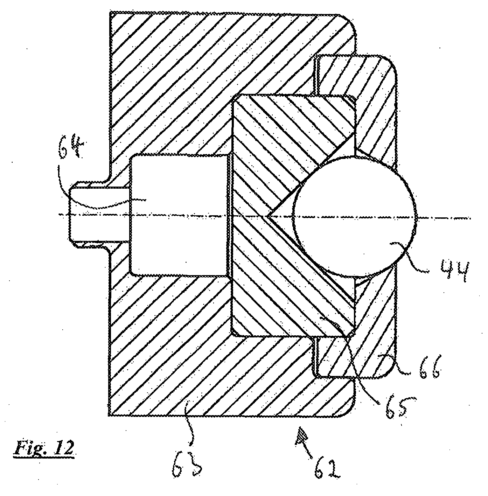

Figur 12 schließlich zeigt im Detail eine Variante einer Stoßkörperhalterung 62 mit kugelförmigem Stoßkörper 44. Der Unterblock 63 weist eine Aufnahme 64 für eine hier nicht dargestellte Schraube auf, mit der der Unterblock 63 an einem Rollenzapfen einer Umlenkrölle fixiert werden kann. Im Unterblock 63 ist, zum Beispiel durch eine hier nicht dargestellte Schraubverbindung, eine Stoßkörperaufnahme 65 fixiert. Mittels eines Fixierelements 66, das über eine hier nicht dargestellte Gewindeverbindung in den Unterblock 63 eingeschraubt werden kann, kann der Stoßkörper 44 auf der Stoßkörperaufnahme 65 fixiert werden. Die Schraubverbindungen lassen eine einfache Neumontage eines Stoßkörpers 44, der ein Verschleißteil darstellt, zu.

**Bezugszeichenliste**

| | | | |
|---|---|---|---|
| 1 | Tragarm | 31 | Gleitlager |
| 2 | Tragarm | 32 | Gleitlagerschale |
| 3 | Umlenkrolle | 33 | Gleitlagerinnenring |
| 4 | Festlager | 34 | erste Tragarmvariante |
| 5 | Loslager | 35 | Klemmelement |
| 6 | Traverse | 36 | Wandbereich |
| 7 | Loslagergehäuse | 37 | zweite Tragarmvariante |
| 8 | Verschiebeeinheit | 38 | Umlenkrollenvariante |
| 9 | Rolle | 39 | Rollenzapfen |
| 10 | Armhalterung | 40 | Unterblock |
| 11 | Stabilisierungseinheit | 41 | Stoßkörperhalterung |
| 12 | elastisches Gegenelement | 42 | Schraube |
| 13 | Grundeinheit | 43 | Fixierelement |
| 14 | Federelement | 44 | Stoßkörper |
| 15 | Tragarm-Anschlagselement | 45 | Lageraufnahme |
| 16 | Stoßkörper | 46 | ringförmiges Keilelement |
| 17 | Sicherungsbügel | 47 | Keilstück |
| 18 | Anschlagsplatte | 48 | Endstück |
| 19 | Begrenzungsanschlagselement | 49 | Sicherungsbügel |
| 20 | Wälzlager | 50 | Feder |
| 21 | Außenring | 51 | Anschlagplatte |
| 22 | Innenring | 52 | Nut |
| 23 | Rollenzapfen | 53 | Ausläufer des Keilelement |
| 24 | Wälzkörper | 54 | dritte Tragarmvariante |
| 25 | Lagerspalt | 55 | Lageraufnahme |
| 26 | Nut | 56 | Anschnitt |
| 27 | Begrenzungsscheibe | 57 | vierte Tragarmvariante |
| 28 | Begrenzungsscheibe | 58 | Zugankerstäbe |
| 29 | elastische Dichtscheibe | 59 | Wälzlageraufnahme |
| 30 | elastische Dichtscheibe | 60 | Tragarm-Teilstück |
| 61 | | | Tragarm-Teilstück |
| 62 | | | Stoßkörperhalterung |
| 63 | | | Unterblock |
| 64 | | | Aufnahme für Schraube |
| 65 | | | Stoßkörperaufnahme |
| 66 | | | Fixierelement |
| 67 | | | Stoßkörperaufnahme |

## Patentansprüche

1. Vorrichtung zur Bandführung in einem heißen Medium, umfassend
eine an Tragarmen (1, 2, 34, 37, 54, 57) gelagerte Umlenkrolle (3, 38) und eine die Tragarme (1, 2, 34, 37, 54, 57) haltende Trägereinrichtung, wobei
einer der Tragarme (1, 2, 34, 37, 54, 57) mittels eines Loslagers (5) an der Trägereinrichtung gelagert ist, wobei das Loslager (5) dem damit gelagerten Tragarm an der Trägereinrichtung eine Bewegung parallel zur Längsrichtung der Umlenkrolle (3, 38) erlaubt,
**dadurch gekennzeichnet, dass**
ein parallel zur Längsrichtung der Umlenkrolle (3, 38) auf den am Loslager (5) gelagerten Tragarm (1, 2, 34, 37, 54, 57) wirkendes elastisches Gegenelement (12) vorhanden ist, das einem zunehmenden Abstand zwischen den Tragarmen (1, 2, 34, 37, 54, 57) entgegenwirkt.

2. Vorrichtung nach Anspruch 1, **dadurch gekennzeichnet, dass** ein in seiner Position einstellbares Tragarm-Anschlagselement (15) zur Begrenzung der Bewegung des am Loslager (5) gelagerten Tragarms (1, 2, 34, 37, 54, 57) vorhanden ist.

3. Vorrichtung nach einem der vorhergehenden Ansprüche, **dadurch gekennzeichnet, dass** die Umlenkrolle (3, 38) über Rollenzapfen (23, 39) und jeweils ein Zapfenlager (20, 31) an den Tragarmen (1, 2, 34, 37, 54, 57) gelagert ist und an den Tragarmen (1, 2, 34, 37, 54, 57) Rollen-Anschlagselemente (18) für die Rollenzapfen (23, 39) vorgesehen sind.

4. Vorrichtung nach Anspruch 3, **dadurch gekennzeichnet, dass** mindestens eines der Zapfenlager (20, 31) gegenüber dem heißen Medium ungekapselt ist.

5. Vorrichtung nach Anspruch 3 oder 4, **dadurch gekennzeichnet, dass** mindestens eines der Zapfenlager (20, 31) vollständig keramisch ist.

6. Vorrichtung nach einem der Ansprüche 3 bis 5, **dadurch gekennzeichnet, dass** zwischen dem jeweiligen Zapfenlager (20, 31) und dem Rollenzapfen (23, 39) in radialer Richtung ein Lagerspalt (25) vorgesehen und der Lagerspalt (25) gegen Eindringen von Schmelze abgedichtet ist.

7. Vorrichtung nach Anspruch 6, **dadurch gekennzeichnet, dass** zur Abdichtung des Lagerspalts (25) mindestens eine in axialer Richtung am Zapfenlager (20, 31) anliegende elastische Dichtscheibe (29, 30) dient.

8. Vorrichtung nach einem der Ansprüche 3 bis 7, **dadurch gekennzeichnet, dass** mindestens eines der Zapfenlager (20, 31) jeweils im zugehörigen Tragarm (1, 2, 34, 37, 54, 57) mittels am äußeren Rand des Zapfenlagers (20, 31) angreifenden Kraft- oder Formschlusses gegen ein Lösen aus einer Lageraufnahme (45, 55) des Tragarms (1, 2, 34, 37, 54, 57) gesichert ist.

9. Vorrichtung nach Anspruch 8, **dadurch gekennzeichnet, dass** mindestens eines der Zapfenlager (20, 31) mittels eines am Zapfenlager (20, 31) und am zugehörigen Tragarm (1, 2, 34, 37, 54, 57) angreifenden Klemmkörpers (35, 46) gesichert ist.

10. Vorrichtung nach Anspruch 9, **dadurch gekennzeichnet, dass** der Klemmkörper (35, 46) im Vergleich zum Material des Tragarms (1, 2, 34, 37, 54, 57) einen höheren thermischen Ausdehnungskoeffizienten aufweist.

11. Vorrichtung nach Anspruch 10, **dadurch gekennzeichnet, dass** der Klemmkörper (35, 46) stabförmig oder ringförmig ist.

12. Vorrichtung nach Anspruch 11, **dadurch gekennzeichnet, dass** der ringförmige Klemmkörper (35, 46) ein ringförmiges und im Querschnitt keilförmiges Keilstück (47) mit in axialer Richtung abnehmender Dicke umfasst.

13. Vorrichtung nach Anspruch 12, **gekennzeichnet durch** ein in axialer Richtung auf den Klemmkörper (35, 46) wirkendes elastisches Federelement (50).

14. Vorrichtung nach Anspruch 8, **dadurch gekennzeichnet, dass** mindestens eines der Zapfenlager (20, 31) mittels mindestens eines Zugankers (58) gesichert ist, wobei der mindestens eine Zuganker zwischen zwei die Lageraufnahme (45, 55) bildenden getrennten Tragarm-Teilen (60, 61) wirkt und einen gegenüber dem Material des Tragarms (1, 2, 34, 37, 54, 57) geringeren thermischen Ausdehnungskoeffizienten aufweist.

15. Vorrichtung nach Anspruch 8, **dadurch gekennzeichnet, dass** die Lageraufnahme (45, 55) einen formschlüssig auf mindestens eines der Zapfenlager (20, 31) wirkenden Anschnitt aufweist.

## Claims

1. A device for strip guidance in a hot medium, comprising
a deflection roller (3, 38) which is mounted on supporting arms (1, 2, 34, 37, 54, 57) and
a carrier device holding the supporting arms (1, 2, 34, 37, 54, 57),wherein
one of the supporting arms (1, 2, 34, 37, 54, 57) is mounted on a carrier device by means of a floating bearing (5), wherein the floating bearing (5) allows the supporting arm mounted thereby on the carrier device to move parallel to the longitudinal direction of the deflection roller **characterized in that** an elastic counterelement (12) acting parallel to the longitudinal direction of the deflection roller (3, 38) on the supporting arm (1, 2, 34, 37, 54, 57) mounted on the floating bearing (5) is present and counteracts an increasing distance between the supporting arms (1, 2, 34, 37, 54, 57).

2. The device as claimed in claim 1, **characterized in that** a supporting arm stop element (15) adjustable in position is present for limiting the movement of the supporting arm (1, 2, 34, 37, 54, 57) mounted on the floating bearing (5).

3. The device as claimed in one of the preceding claims, **characterized in that** the deflection roller (3, 38) is mounted on the supporting arms (1, 2, 34, 37, 54, 57) via roller journals (23, 39) and in each case a journal bearing (20, 31) and that roller stop elements (18) for the roller journals (23, 39) are provided on the supporting arms (1, 2, 34, 37, 54, 57).

4. The device as claimed claim 3, **characterized in that** at least one of the journal bearings (20, 31) is unencapsulated with respect to the hot medium.

5. The device as claimed in claim 3 or 4, **characterized in that** at least one of the journal bearings (20, 31)is entirely ceramic.

6. The device as claimed in one of claims 3 to 5, **characterized in that** a bearing gap (25) is provided in the radial direction between the respective journal bearing (20, 31) and the roller journal (23, 39) and the bearing gap (25) is sealed off against the penetration of molten material.

7. The device as claimed in claim 6, **characterized in that** at least one elastic sealing disk (29, 30) resting in the axial direction on the journal bearing (20, 31) serves for sealing off the bearing gap (25).

8. The device as claimed in one of claims 3 to 7, **characterized in that** at least one of the journal bearings (20, 31) is secured in each case in the associated supporting arm (1, 2, 34, 37, 54, 57) against release from a bearing receptacle (45, 55) of the supporting arm (1, 2, 34, 37, 54, 57) by means of a non-positive lock or positive lock which engages on the outer edge of the journal bearing (20, 31).

9. The device as claimed in claim 8, **characterized in that** at least one of the journal bearings (20, 31) is secured by means of a clamping body (35, 46) which engages on the journal bearing (20, 31) and on the associated supporting arm (1, 2, 34, 37, 54, 57).

10. The device as claimed in claim 9, **characterized in that** the clamping body (35, 46) has a higher coefficient of thermal expansion compared to the material of the supporting arm (1, 2, 34, 37, 54, 57).

11. The device as claimed in claim 10, **characterized in that** the clamping body (35, 46) has a bar shape or an annular shape.

12. The device as claimed in claim 11, **characterized in that** the annular clamping body (35, 46) comprises an annular wedge piece (47) of wedge-shaped cross section with a thickness which decreases in the axial direction.

13. The device as claimed in claim 12, **characterized by** an elastic spring element (50) acting on the clamping body (35, 46) in the axial direction.

14. The device as claimed in claim 8, **characterized in that** at least one of the journal bearings (20, 31) is secured by means of at least one tie rod (58), wherein the at least one tie rod acts between two separate supporting arm parts (60, 61) which form the bearing receptacle (45, 55) and has a lower coefficient of thermal expansion than the material of the supporting arm (1, 2, 34, 37, 54, 57).

15. The device as claimed in claim 8, **characterized in that** the bearing receptacle (45, 55) has a chamfer acting on at least one of the journal bearings (20, 31) in a positive-locking manner.

## Revendications

1. Dispositif de guidage d'un matériau sous forme de bande dans un milieu à température élevée, comprenant une poulie de renvoi (3, 38) supportée sur des bras de support (1, 2, 34, 37, 54, 57) et un dispositif de support retenant les bras de support (1, 2, 34, 37, 54, 57), l'un des bras de support (1, 2, 34, 37, 54, 57) étant supporté sur le dispositif de support au moyen d'un palier libre (5), le palier libre (5) permettant au bras de support supporté avec celui-ci sur le dispositif de support de se déplacer parallèlement à la direction longitudinale de la poulie de renvoi (3, 38),
**caractérisé en ce**
**qu'**il est prévu un élément conjugué élastique (12) agissant parallèlement à la direction longitudinale de la poulie de renvoi (3, 38) sur le bras de support (1, 2, 34, 37, 54, 57) supporté par le palier libre (5), lequel agit à l'encontre de l'augmentation d'un espacement entre les bras de support (1, 2, 34, 37, 54, 57).

2. Dispositif selon la revendication 1, **caractérisé en ce qu'**un élément de butée de bras de support (15) de position ajustable est prévu pour limiter le déplacement du bras de support (1, 2, 34, 37, 54, 57) supporté par le palier libre (5).

3. Dispositif selon l'une quelconque des revendications précédentes, **caractérisé en ce que** la poulie de renvoi (3, 38) est supportée par le biais de tourillons de rouleau (23, 39) et à chaque fois d'un palier de tourillon (20, 31) sur les bras de support (1, 2, 34, 37, 54, 57) et des éléments de butée de rouleau (18) pour les tourillons de rouleau (23, 39) sont prévus sur les bras de support (1, 2, 34, 37, 54, 57).

4. Dispositif selon la revendication 3, **caractérisé en ce qu'**au moins l'un des paliers de tourillon (20, 31) est exposé sans capsule par rapport au milieu à température élevée.

5. Dispositif selon la revendication 3 ou 4, **caractérisé en ce qu'**au moins l'un des paliers de tourillon (20, 31) est entièrement constitué de céramique.

6. Dispositif selon l'une quelconque des revendications 3 à 5, **caractérisé en ce qu'**entre le palier de tourillon respectif (20, 31) et le tourillon de rouleau (23, 39) est prévu un interstice de palier (25) dans la direction radiale et l'interstice de palier (25) est étanchéifié pour empêcher la pénétration de matière en fusion.

7. Dispositif selon la revendication 6, **caractérisé en ce que** pour l'étanchéité de l'interstice de palier (25), on utilise au moins une rondelle d'étanchéité élastique (29, 30) s'appliquant dans la direction axiale contre le palier de tourillon (20, 31).

8. Dispositif selon l'une quelconque des revendications 3 à 7, **caractérisé en ce qu'**au moins l'un des paliers de tourillon (20, 31) à chaque fois dans le bras de support associé (1, 2, 34, 37, 54, 57) est fixé au moyen d'un engagement par force et/ou par correspondance de formes s'exerçant sur le bord extérieur du palier de tourillon (20, 31) contre un desserrement hors d'un logement de palier (45, 55) du bras de support (1, 2, 34, 37, 54, 57).

9. Dispositif selon la revendication 8, **caractérisé en ce qu'**au moins l'un des paliers de tourillon (20, 31) est fixé au moyen d'un corps de serrage (35, 46) s'engageant avec le palier de tourillon (20, 31) et avec le bras de support associé (1, 2, 34, 37, 54, 57).

10. Dispositif selon la revendication 9, **caractérisé en ce que** le corps de serrage (35, 46), par comparaison avec le matériau du bras de support (1, 2, 34, 37, 54, 57), présente un coefficient de dilatation thermique supérieure.

11. Dispositif selon la revendication 10, **caractérisé en ce que** le corps de serrage (35, 46) est réalisé en forme de barre ou sous forme annulaire.

12. Dispositif selon la revendication 11, **caractérisé en ce que** le corps de serrage annulaire (35, 46) présente une pièce formant clavette (47) de forme annulaire et de section transversale en forme de clavette avec une épaisseur diminuant dans la direction axiale.

13. Dispositif selon la revendication 12, **caractérisé par** un élément de ressort élastique (50) agissant dans la direction axiale sur le corps de serrage (35, 46).

14. Dispositif selon la revendication 8, **caractérisé en ce qu'**au moins l'un des paliers de tourillon (20, 31) est fixé au moyen d'au moins un tirant d'ancrage (58), l'au moins un tirant d'ancrage agissant entre deux parties de bras de support (60, 61) séparées formant le logement de palier (45, 55) et présentant un coefficient de dilatation thermique inférieur à celui du matériau du bras de support (1, 2, 34, 37, 54, 57).

15. Dispositif selon la revendication 8, **caractérisé en ce que** le logement de palier (45, 55) présente une découpe agissant par engagement par correspondance de formes sur au moins l'un des paliers de tourillon (20, 31).
